# EUROPÄISCHE PATENTSCHRIFT

(11) **EP 2 210 224 B1**
(45) Veröffentlichungstag und Bekanntmachung des Hinweises auf die Patenterteilung: **27.04.2011**
(21) Anmeldenummer: 08848758.2
(22) Anmeldetag: 07.11.2008
(51) Int. Cl.: G06K 19/10

(54) **DOKUMENT MIT EINER INTEGRIERTEN ANZEIGEVORRICHTUNG**
DOCUMENT COMPRISING A BUILT-IN DISPLAY DEVICE
DOCUMENT À DISPOSITIF D'AFFICHAGE INTÉGRÉ

(30) Priorität: 12.11.2007 DE 102007000874
(43) Veröffentlichungstag der Anmeldung: 28.07.2010
(73) Patentinhaber: Bundesdruckerei GmbH, 10958 Berlin (DE)
(72) Erfinder: DIETRICH, Frank, 12437 Berlin (DE); FRITZE, Frank, 12487 Berlin (DE); FISCHER, Jörg, 13053 Berlin (DE); PAESCHKE, Manfred, 16348 Wandlitz (DE); PFLUGHOEFFT, Malte, 13347 Berlin (DE); DRESSEL, Olaf, 14641 Wustermark (DE)
(74) Vertreter: Richardt Patentanwälte
(86) Internationale Anmeldenummer: PCT/EP2008/065150
(87) Internationale Veröffentlichungsnummer: WO 2009/062893

(56) Entgegenhaltungen:
- GB-A- 2 082 804
- US-A- 5 180 902
- US-A- 5 789 732
- US-A1- 2006 115 110

## Beschreibung

Die Erfindung betrifft ein Dokument, insbesondere ein Wert- oder Sicherheitsdokument, mit einer integrierten Anzeigevorrichtung, ein Lesegerät und ein Verfahren zur Verifikation eines Dokuments.

Dokumente mit einer integrierten elektronischen Schaltung sind aus dem Stand der Technik an sich in verschiedener Form bekannt. Beispielsweise gibt es Wert- und Sicherheitsdokumente in überwiegend papierbasierter Form, wie zum Beispiel als Banknote, als elektronischen Reisepass, oder als kunststoffbasierte Chipkarte, insbesondere als sogenannte Smart Card, in kontaktbehafteter, kontaktloser oder Dual-Interface Ausführung. Hierzu wird insbesondere auf die DE 10 2005 025 806 verwiesen.

Insbesondere sind verschiedene Funk-Erkennungssysteme für solche Dokumente aus dem Stand der Technik bekannt, die auch als Radio Frequency Identification (RFID) Systeme bezeichnet werden. Vorbekannte RFID-Systeme beinhalten im Allgemeinen zumindest einen Transponder und eine Sende-Empfangseinheit. Der Transponder wird auch als RFID-Etikett, RFID-Chip, RFID-Tag, RFID-Label oder Funketikett bezeichnet; die Sende-Empfangseinheit wird auch als Lesegerät, Leseeinrichtung oder Reader bezeichnet. Ferner ist oft die Integration mit Servern, Diensten und sonstigen Systemen, wie zum Beispiel Kassensystemen oder Warenwirtschaftssystemen über eine so genannte Middle Ware vorgesehen.

Die auf einem kontaktlosen, beispielsweise einem RFID-Transponder gespeicherten Daten werden über Radiowellen verfügbar gemacht. Bei niedrigen Frequenzen geschieht dies induktiv über ein Nahfeld, bei höheren Frequenzen über ein elektromagnetisches Fernfeld.

Ein RFID-Transponder beinhaltet üblicherweise einen Mikrochip und eine Antenne, die in einem Träger oder Gehäuse untergebracht oder auf ein Substrat aufgedruckt sind. Aktive RFID-Transponder verfügen im Gegensatz zu passiven Transpondern ferner über eine Energiequelle, wie zum Beispiel eine Batterie.

RFID-Transponder sind für verschiedene Dokumente einsetzbar, insbesondere in Chipkarten, beispielsweise zur Realisierung einer elektronischen Geldbörse oder für Electronic Ticketing. Des Weiteren werden diese in Papier oder Kunststoff, wie zum Beispiel in Wert- und Sicherheitsdokumenten, insbesondere Geldscheinen und Ausweisdokumenten, integriert.

Aus der DE 201 00 158 U1 ist beispielsweise eine Identifikations- und Sicherheitskarte aus laminierten und / oder gespritzten Kunststoffen bekannt, die einen integrierten Halbleiter mit einer Antenne zur Durchführung eines RFID-Verfahrens beinhaltet. Aus der DE 10 2004 008 841 A1 ist ferner ein buchartiges Wertdokument, wie zum Beispiel ein Passbuch bekannt geworden, welches eine Transpondereinheit beinhaltet.

Solche Sicherheits- oder Wertdokumente können eine integrierte Anzeigevorrichtung aufweisen, wie es z.B. aus DE 10 2005 030 626 A1, DE 10 2005 030 627 A1, DE 10 2005 030 628 A1, WO 2004/080100 A1, EP 1 023 692 B1, DE 102 15 398 B4, EP 1 173 825 B1, EP 1 230 617 B1, EP 1 303 835 B1, EP 1 537 528 B1, WO 03/030096 A1, EP 0 920 675 B1, US 6,019,284, US 6,402,039 B1, WO 99/38117 bekannt ist.

Sicherheits- oder Wertdokumente können mit einer kontaktbehafteten oder kontaktlosen Schnittstelle, beispielsweise einem RFID-Interface, ausgestattet sein oder mit einer Schnittstelle, die sowohl eine drahtgebundene als auch eine drahtlose Kommunikation mit einem Chipkarten-Terminal zulässt. Im letzteren Fall spricht man auch von so genannten Dual-Interface Chipkarten. Chipkarten-Kommunikationsprotokolle und -verfahren sind zum Beispiel in der Norm ISO 7816, ISO 14443, ISO 15763 festgelegt.

Ein Nachteil solcher Dokumente mit RFID-Funktionalität ist, dass ohne Einverständnis des Trägers des Dokuments die RFID-Schnittstelle angesprochen werden kann. Ein Schutzmechanismus für Reisedokumente zum Schutz gegen unbefugtes Auslesen der Daten aus einem solchen Dokument ist als "Basic Access Control" bekannt, vgl. hierzu "Machine Readable Travel Document", Technical Report, PKI for Machine Readable Travel Documents Offering ICC Read-Only Access, Version 1.1, Oktober 01, 2004, International Civil Aviation Organisation (ICAO). Ein Verfahren für den besonderen Schutz biometrischer Daten, d.h. die sog. Extended Access Control, ist beispielsweise aus der oben bereits genannten DE 10 2005 025 806 bekannt.

Aus der zum Anmeldezeitpunkt unveröffentlichten Patentanmeldung DE 10 2006 031 422.0-53 derselben Anmelderin ist ein Wert- oder Sicherheitsdokument mit einer Anzeigevorrichtung zur Ausgabe eines maschinenlesbaren optischen Signals, welches durch einen Benutzer nicht kognitiv erfassbar ist, bekannt.

Aus WO 2007/137555 A2 ist ein elektronisch konfigurierbares Kraftfahrzeug-Kennzeichen mit einem Display bekannt. Um das Kraftfahrzeug-Kennzeichen zu konfigurieren, werden Daten in einer externen Konfigurationseinheit zusammengestellt und verschlüsselt. Die verschlüsselten Daten werden von einem in die Konfigurationseinheit integrierten Infrarot-Sender als Infrarot-Signale ausgesendet. In der Anzeigeelektronik für das Kraftfahrzeug-Kennzeichen werden die Signale entschlüsselt, wofür eine entsprechende Entschlüsselungs-Software in der Anzeigeelektronik gespeichert ist. Weitere elektronische Kraftfahrzeug-Kennzeichen sind bekannt aus US 5,657,008 und US 2007/0285361 A1.

Das Dokument US2006/0115115 A1 offenbart die Merkmale des Oberbegriffs des Anspruchs 1. Der Erfindung liegt dem gegenüber die Aufgabe zu Grunde, ein verbessertes Dokument, ein Lesegerät für ein Dokument und ein Verfahren zur Verifikation eines Dokuments zu schaffen.

Die der Erfindung zu Grunde liegenden Aufgaben werden jeweils mit den Merkmalen der unabhängigen Patentansprüche gelöst. Ausführungsformen der Erfindung sind in den abhängigen Patentansprüchen angegeben.

Ausführungsformen eines erfindungsgemäßen Dokuments beinhalten eine integrierte Anzeigevorrichtung sowie einen elektronischen Speicher zur Speicherung erster und zweiter Daten. Durch Steuerungsmittel des Dokuments wird die Anzeigevorrichtung zur Wiedergabe der ersten Daten angesteuert. Ferner sind die Steuerungsmittel zur Ansteuerung der Anzeigevorrichtung für eine Modulation ausgebildet, um die zweiten Daten von der Anzeigevorrichtung optisch zu senden.

Nach einer Ausführungsform der Erfindung erfolgt die Modulation durch Modulation der Wiedergabe der ersten Daten. Beispielsweise wird die Intensität der Wiedergabe der ersten Daten zum Senden der zweiten Daten moduliert. Die Variation der Intensität kann dabei so durchgeführt werden, dass sie mit dem bloßen Auge nicht wahrnehmbar ist.

Nach einer Ausführungsform der Erfindung hat die Anzeigevorrichtung mehrere ansteuerbare Anzeigenelemente. Die Modulation kann bei einer solchen Ausführungsform durch Ansteuerung aller Anzeigeelemente oder nur einer Teilmenge der Anzeigeelemente erfolgen. Im letzteren Fall kann durch die Teilmenge der Anzeigeelemente ein zusammenhängender Bereich der Anzeigevorrichtung gebildet werden.

Nach einer Ausführungsform der Erfindung ist die Anzeigevorrichtung für eine farbige Wiedergabe ausgebildet. Jedes Bildelement der Anzeigevorrichtung wird hierzu durch zumindest drei verschieden farbige Anzeigeelemente gebildet, wie zum Beispiel ein rotes, grünes und blaues Anzeigeelement (RGB-Anzeige).

Nach einer Ausführungsform der Erfindung werden nur Anzeigeelemente derselben Farbe für die Modulation angesteuert, wohingegen Anzeigeelemente anderer Farben lediglich für die Wiedergabe der ersten Daten dienen.

Nach einer Ausführungsform der Erfindung erfolgt die Wiedergabe der ersten Daten mit einer vorgegebenen Bild-Wiederholperiode. Beispielsweise beträgt die Bild-Wiederholperiode 0,04 s, entsprechend einer Bild-Wiederholfrequenz von 25 Hz. Zumindest eine Teilmenge der Anzeigeelemente wird nur während eines Teils der Bild-Wiederholperiode angesteuert. Während eines ersten Teilintervalls einer Bild-Wiederholperiode werden diese Anzeigeelemente also angesteuert, so dass sie mehr oder weniger intensiv leuchten, wohingegen während eines zweiten Teilintervalls der Bild-Wiederholperiode eine solche Ansteuerung nicht erfolgt, so dass die davon betroffenen Anzeigeelemente nicht leuchten. Durch die Auswahl dieser Anzeigeelemente, die Länge und/oder die zeitliche Verteilung der ersten und zweiten Teilintervalle kann bei dieser Ausführungsform die Modulation erfolgen.

Dadurch, dass während des zweiten Teilintervalls keine Ansteuerung zumindest eines Teils der Anzeigeelemente erfolgt, kann der visuelle Eindruck entstehen, dass die Wiedergabe der ersten Daten in Teilbereichen dunkler ist, als in anderen. Um diesen visuellen Eindruck zu kompensieren, werden diejenigen Anzeigeelemente, die nur während des ersten Teilintervalls angesteuert werden, mit einem größeren Intensitätswert angesteuert, um die geringere Zeitdauer der Ansteuerung durch eine größere Intensität zu kompensieren, so dass im Ergebnis der visuelle Eindruck einer korrekten Wiedergabe der ersten Daten auf der Anzeigevorrichtung resultiert.

Nach einer Ausführungsform der Erfindung sind die Anzeigeelemente der Anzeigevorrichtung als OLEDs ausgebildet. Die Verwendung von OLEDs ist besonders vorteilhaft, da sich deren Intensität in einem relativ weiten Bereich stufenlos modulieren lässt.

Nach einer Ausführungsform der Erfindung hat die Anzeigevorrichtung eine Hintergrundbeleuchtung. Bei dieser Ausführungsform kann die Modulation so erfolgen, dass die Helligkeit der Hintergrundbeleuchtung moduliert wird.

Grundsätzlich können erfindungsgemäß sämtliche bekannte Modulationsverfahren zur Modulation der von den Anzeigeelementen und/oder der Hintergrundbeleuchtung abgegebenen Strahlung eingesetzt werden, insbesondere Pulsweiten-Modulationsverfahren (PWM), Pulskodemodulation (PCM), Amplituden-Modulation (AM), Frequenzmodulation, Phasenmodulation und andere Modulationsverfahren.

Bevorzugt wird ein Modulationsverfahren gewählt, bei dem die Modulation so erfolgt, dass sie visuell mit dem bloßen Auge nicht oder kaum wahrnehmbar ist. Ein Benutzer nimmt mit dem bloßen Auge also lediglich die Wiedergabe der ersten Daten auf der Anzeigevorrichtung wahr, ohne die ergänzende Modulation zur Übertragung der zweiten Daten auf der Anzeigevorrichtung visuell wahrzunehmen.

Bei Modulation der Amplitude, Frequenz oder Phase kann die Modulation so ausgebildet sein, dass die maximale Schwankung der Amplitude, Frequenz oder Phase so gering ist, dass sie zwar maschinell sensierbar, aber nicht visuell wahrnehmbar ist. Bei einem PWM-Verfahren kann die PWM-Periode so kurz gewählt werden, dass sie unterhalb der Wahrnehmungsschwelle des menschlichen Auges liegt. Beispielsweise kann die PWM-Periode mit einem Refresh-Zyklus der Anzeigevorrichtung identisch sein.

Nach einer Ausführungsform der Erfindung handelt es sich bei der in das Dokument integrierten Anzeigevorrichtung um ein Aktiv- oder Passiv-Matrixdisplay oder eine Segment-Anzeige.

Insbesondere kann es sich bei der Anzeigevorrichtung um eine elektrophoretische oder elektrochrome Anzeige, eine bistabile Anzeige, eine Drehelementanzeige, insbesondere sog. elektronisches Papier ("E-Paper"), eine LED-Anzeige, insbesondere eine anorganische, organische oder Hybrid-LED-Anzeige, eine LCD-Anzeige in verschiedenen Ausführungsformen (zum Beispiel Twisted Nematic, Super Twisted Nematic, cholesterisch, nematisch), eine ferroelektrische Anzeige, eine Anzeige auf der Basis des Elektrowetting-Effekts, eine Anzeige auf Basis interferometrischer Modulatorelemente (IMOD), eine Hybridanzeige oder eine Anzeige auf Basis eines flexiblen Displays, wie sie beispielsweise von der Firma Citala (www.citala.com) kommerziell erhältlich ist (vergleiche US 2006/0250535 A1 und WO 2007/054944), handeln.

Die ersten Daten können verschiedene Inhalte beinhalten, die zur Erzeugung einer Bildwiedergabe auf der Anzeigevorrichtung geeignet sind, das heißt, beispielsweise digitale Bildaufnahmen, insbesondere Gesichtsbilder einer Person, Wappen, Siegel, textuelle Angaben, ein Kennzeichen, insbesondere ein amtliches Kraftfahrzeug-kennzeichen, einen Fahrzeugparameter, einen Gebührenstatus, Barcodes und dergleichen.

Nach einer Ausführungsform der Erfindung beinhalten die zweiten Daten eine Information, wie zum Beispiel eine Personalisierungsinformation, ein Sicherheitsmerkmal, einen kryptographischen Schlüssel, ein Kennzeichen, insbesondere ein amtliches Kraftfahrzeugkennzeichen, einen Fahrzeugparameter, und/oder einen Gebührenstatus.

Bei den Personalisierungsinformationen kann es sich beispielsweise um Angaben bezüglich des Trägers des Dokuments handeln, wie zum Beispiel dessen Namen, Wohnort, Größe, Alter, Geschlecht, Gewicht und dergleichen. Diese Angaben können bei der Wiedergabe der zweiten Daten im Klartext auf der Anzeigevorrichtung angezeigt werden.

Nach einer Ausführungsform der Erfindung handelt es sich bei der Information um ein Sicherheitsmerkmal, wie zum Beispiel ein Wappen, Siegel oder dergleichen. Diese Information wird bei der Wiedergabe der ersten Daten durch die Modulation von der Anzeigevorrichtung gesendet.

Nach einer Ausführungsform der Erfindung handelt es sich bei der Information um einen kryptographischen Schlüssel. Bei dem kryptographischen Schlüssel kann es sich um einen symmetrischen oder um einen asymmetrischen Schlüssel handeln. Der kryptographische Schlüssel wird von dem Lesegerät erfasst, so dass das Lesegerät zusammen mit dem Dokument ein kryptographisches Protokoll ausführen kann.

Nach einer Ausführungsform der Erfindung handelt es sich bei der Information um einen Fahrzeugparameter und/oder einen Gebührenstatus des Kraftfahrzeugs. Das Dokument, insbesondere in der Ausführungsform als elektronisches Kraftfahrzeug-kennzeichen, kann an dem Kraftfahrzeug oder einem Kraftfahrzeugteil befestigt sein.

Bei dem Fahrzeugparameter kann es sich z.B. um die Geschwindigkeit des Kraftfahrzeugs, einen Lärmpegel oder einen Abgaswert handeln. Insbesondere kann durch die Information ausgegeben werden, welche Schadstoffklasse das Kraftfahrzeug erfüllt, insbesondere gemäß der anwendbaren Feinstaubverordnung.

Durch die Ausgabe des Gebührenstatus kann angezeigt werden, ob für das Kraftfahrzeug die vorgeschriebenen Gebühren, Steuern und/oder Abgaben, insbesondere Mautgebühren, Kraftfahrzeugsteuern und/oder Abgasgebühren, bezahlt worden sind.

Nach einer Ausführungsform der Erfindung hat das Dokument einen geschützten Speicherbereich, in dem dritte Daten gespeichert sind. Ferner hat das Dokument eine Schnittstelle für einen lesenden Zugriff des Lesegeräts auf diese dritten Daten. Die Schnittstelle kann kontaktbehaftet oder kontaktlos, insbesondere als RFID-Schnittstelle ausgebildet sein. Ferner kann die Schnittstelle auch als so genanntes Dual Mode Interface ausgebildet sind. Die Schnittstelle kann auf einer elektrischen, kapazitiven, induktiven, magnetischen, optischen oder einer anderen physikalischen Kopplungsmethode beruhen. Für kontaktlose Kopplung über eine Antenne, kann diese beispielsweise als Spule, Dipol oder in Form von kapazitiven Flächen ausgebildet sein.

Bedingung für einen Lesezugriff des Lesegeräts auf die dritten Daten ist die zuvorige erfolgreiche Ausführung des kryptographischen Protokolls. Bei dem kryptographischen Protokoll kann es sich zum Beispiel um ein so genanntes Challenge-Response Verfahren handeln. Durch das kryptographische Protokoll werden die dritten Daten gegen unerlaubte Zugriffe geschützt. Dies ist besonders vorteilhaft, wenn es sich bei den dritten Daten um sensitive Daten handelt, wie zum Beispiel biometrische Daten, insbesondere Fingerabdruckdaten oder Iris-Scandaten des Trägers des Dokuments.

Unter einem "Dokument" werden erfindungsgemäß Papier basierte und/oder Kunststoff basierte Dokumente verstanden, wie zum Beispiel Ausweisdokumente, insbesondere Reisepässe, Personalausweise, Visa, Führerscheine, Fahrzeugscheine, Fahrzeugbriefe, Firmenausweise, Gesundheitskarten oder andere ID-Dokumente, sowie auch Chipkarten, Zahlungsmittel, insbesondere Bankkarten und Kreditkarten, Frachtbriefe oder sonstige Berechtigungsnachweise.

Unter einem "Dokument" wird auch ein elektronisches Kennzeichen, insbesondere ein elektronisches Kraftfahrzeugkennzeichen, verstanden. Das Dokument kann auch einen integralen Bestandteil eines Transportmittels, insbesondere eines Kraftfahrzeugs, bilden. Beispielsweise kann das Dokument in die Front- bzw. Heckhaube bzw. in das sog. Frontend oder Backend integriert sein, indem dort ein Display erfindungsgemäß eingebracht oder aufgebracht wird.

Das Dokument kann auch metallbasiert sein, insbesondere blechbasiert; es kann also einen Dokumentenkörper aus Blech haben. Es kann aber auch ein Dokumentenkörper aus einem anderen Material haben, wie z.B. aus einem Verbundmaterial, wie es im Fahrzeugbau verwendet wird.

In einem weiteren Aspekt betrifft die Erfindung ein Lesegerät für ein Dokument. Das Lesegerät hat einen Sensor zur Erfassung der Anzeigevorrichtung und zur Demodulation des von der Anzeigevorrichtung gesendeten optischen Signals.

Nach einer Ausführungsform der Erfindung ist das Lesegerät zur Verifikation des Dokuments mit Hilfe der mittels der Demodulation erfassten Information ausgebildet. Beispielsweise vergleicht das Lesegerät die erfasste Information mit einer Referenz-Information. Eine hinreichende Übereinstimmung zwischen der erfassten Information und der Referenzinformation ist dabei eine Vorraussetzung dafür, dass das Dokument als echt anerkannt wird. Nach einer Ausführungsform ist die Referenzinformation auf das Dokument sichtbar aufgebracht, insbesondere kann es sich hierbei um die Personalisierungsinformationen wie Name und Ausweisnummer handeln. Auf diese Weise werden die Personalisierungsinformationen gegen Manipulation geschützt.

Nach einer Ausführungsform der Erfindung hat das Lesegerät Mittel zur Ausführung des kryptographischen Protokolls mittels der durch die Demodulation erfassten Information. Bei dieser Information handelt es sich beispielsweise um einen kryptographischen Schlüssel. Aufgrund der Erfassung des kryptographischen Schlüssels kann das Lesegerät mit dem Dokument das kryptographische Protokoll ausführen. Nach erfolgreicher Durchführung des kryptographischen Protokolls kann das Lesegerät auf einen geschützten Speicherbereich des Dokuments zugreifen, um von dort Daten auszulesen.

Nach einer Ausführungsform der Erfindung ist das Lesegerät zur Erfassung des Dokuments eines vorbeifahrenden Transportmittels ausgebildet; bei dieser Ausführungsform ist das Dokument beispielsweise als elektronisches Kraftfahrzeugkennzeichen ausgebildet. Das Lesegerät kann z.B. zur Erfassung eines Fahrzeugparameters, eines Fahrparameters oder eines Gebührenstatus des Kraftfahrzeugs dienen, insbesondere zur Durchführung von Verkehrskontrollen, Abgaskontrollen und/oder Gebührenkontrollen.

In einem weiteren Aspekt betrifft die Erfindung ein Verfahren zur Verifikation eines Dokuments. Zur Verifikation des Dokuments wird das von der Anzeigevorrichtung optisch gesendete Signal demoduliert, um eine Information zu erfassen. Die Information wird zur Prüfung der Echtheit des Dokuments mit einer Referenzinformation verglichen.

In einem weiteren Aspekt betrifft die Erfindung ein Computerprogrammprodukt zur Ausführung eines erfindungsgemäßen Verfahrens.

Im Weiteren werden Ausführungsformen der Erfindung mit Bezugnahme auf die Zeichnungen näher erläutert. Es zeigen:
- Figur 1: ein Blockdiagramm einer Ausführungsform eines erfindungsgemä- ßen Dokuments,
- Figur 2: ein Blockdiagramm einer weiteren Ausführungsform eines erfin- dungsgemäßen Dokuments,
- Figur 3: eine Modulation der Hintergrundbeleuchtung zur Übertragung der Information,
- Figur 4: eine schematische Draufsicht auf eine Ausführungsform einer An- zeigevorrichtung
- Figur 5: eine Draufsicht auf eine weitere Ausführungsform der Anzeigevor- richtung,
- Figur 6: eine Draufsicht auf eine weitere Ausführungsform eines erfindungs- gemäßen Dokuments.

Elemente der nachfolgenden Ausführungsformen, die einander entsprechen, sind mit denselben Bezugszeichen gekennzeichnet.

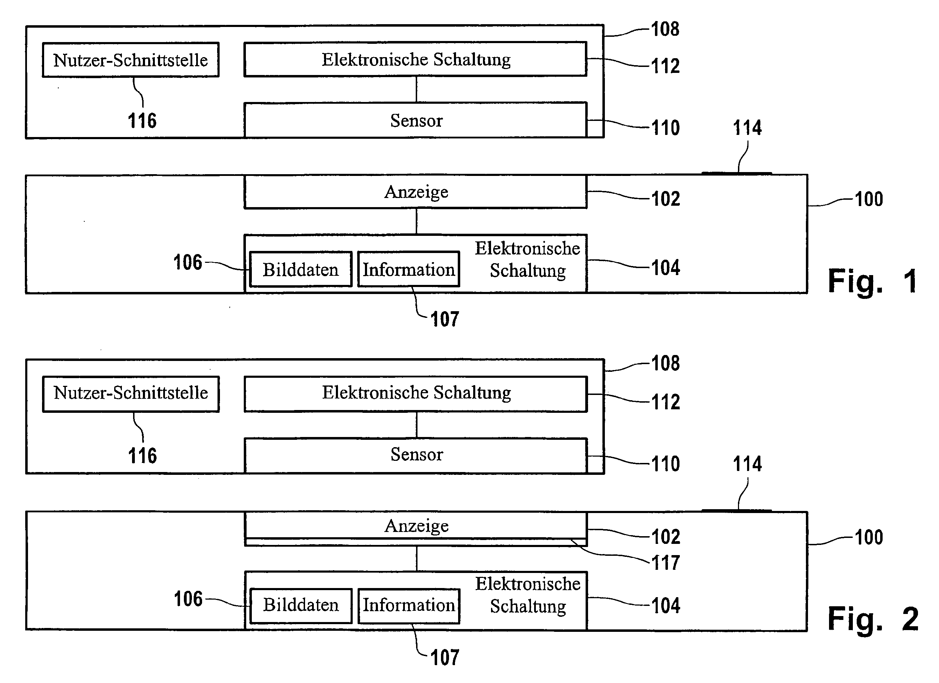

Die Figur 1 zeigt ein Dokument 100 mit einer in dem Dokumentenkörper des Dokuments 100 integrierten Anzeige 102 und eine elektronische Schaltung 104 zur Ansteuerung der Anzeige 102. Die Anzeige 102 beinhaltet eine Vielzahl von Anzeigeelementen, die beispielsweise matrixförmig angeordnet sein können. Insbesondere kann es sich bei der Anzeige 102 um eine Passiv- oder um eine Aktiv-Matrixanzeige handeln.

Die elektronische Schaltung 104 beinhaltet ein oder mehrere elektronische Speicher zur Speicherung von ersten Daten 106 und zweiten Daten 107. Die elektronische Schaltung 104 kann auf die Daten 106 und 107 zugreifen. Insbesondere dient die elektronische Schaltung 104 zum Zugriff auf die Daten 106, um die Anzeige 102 zur Wiedergabe der Daten 106 anzusteuern, so dass ein Benutzer des Dokuments 100 die Wiedergabe der Daten 106 visuell wahrnehmen kann.

Die elektronische Schaltung 104 dient ferner zum Zugriff auf die Daten 107, um die Anzeige 102 zum Senden der zweiten Daten 107 anzusteuern. Hierzu steuert die elektronische Schaltung 104 die Anzeigevorrichtung 102 so an, dass ein optisches Signal abgegeben wird, dass zur Übertragung der zweiten Daten 107 moduliert ist. Diese Modulation ist vorzugsweise so ausgebildet, dass sie durch den Benutzer mit dem bloßen Auge nicht wahrnehmbar ist.

Bei den Daten 106 kann es sich zum Beispiel um Bilddaten handeln. Unter "Bilddaten" werden hier Daten verstanden, die sich zur Wiedergabe auf der Anzeige 102 eignen, das heißt zum Beispiel eine digitale Fotografie, textuelle Angaben, ein Kennzeichen, insbesondere ein amtliches Kraftfahrzeugkennzeichen, oder dergleichen.

Die Daten 107 können ein oder mehrere Informationen beinhalten, wie zum Beispiel Personalisierungsinformationen, ein Sicherheitsmerkmal, einen kryptographischen Schlüssel, einen Fahrzeugparameter und/oder einen Gebührenstatus. Insbesondere kann es sich hierbei um benutzerspezifische Informationen, wie zum Beispiel Informationen über den Träger des Dokuments handeln und/oder Daten bezüglich der Gültigkeit des Dokuments, der ausstellenden Behörde oder dergleichen. Zumindest eine Teilmenge der Daten 106 und 107 kann auch identisch sein: Beispielsweise beinhalten sowohl die Daten 106 als auch die Daten 107 das amtliches Kraftfahrzeugkennzeichen. Das amtliche Kraftfahrzeugkennzeichen wird also auch in Form der Daten 107 ausgegeben, so dass die Validität des Dokument 100, insbesondere in einer Ausführungsform als elektronisches Kraftfahrzeugkennzeichen, überprüft werden kann, indem das auf der Anzeigevorrichtung angezeigte amtliche Kraftfahrzeugkennzeichen mit dem über die Modulation ausgegebene Kennzeichen verglichen wird.

Das Lesegerät 108 hat einen optischen Sensor 110, wie zum Beispiel einen CCD-Sensor oder einen optischen Scanner. Der Sensor 110 ist dazu ausgebildet, das von der Anzeigevorrichtung gesendete modulierte optische Signal zu erfassen.

Der Sensor 110 ist mit einer elektronischen Schaltung 112 des Lesegeräts 108 verbunden. Durch die elektronische Schaltung 112 ist ein Demodulator implementiert. Der Demodulator dient zur Demodulation des optischen Signals, um die in den zweiten Daten beinhaltete Information zu empfangen.

Nach einer Ausführungsform handelt es sich bei dem Demodulator um einen sogenannten Lock-In-Verstärker. Mit Hilfe des Lock-In-Verstärkers wird die Existenz eines auf einer gewissen Frequenz modulierten Signals detektiert. Hierbei ist die Information das Vorhandensein der Modulation, welche die Echtheit des Dokuments bestätigt.

Das Lesegerät 108 hat ferner eine Nutzerschnittstelle 116. Alternativ oder zusätzlich kann das Lesegerät 108 auch eine Schnittstelle zu einem Computer und/oder einem Netzwerk aufweisen.

Wenn die Information durch Demodulation des optischen Signals von dem Lesegerät 108 empfangen worden ist, wird die Information beispielsweise über die Nutzerschnittstelle 116 ausgegeben.

Beispielsweise handelt es sich bei der Information um eine Personalisierungsinformation. Diese Personalisierungsinformation kann auf dem Dokument 100 als Aufdruck 114 im Klartext angegeben sein. Durch Vergleich der über die Nutzerschnittstelle 116 ausgegebenen Personalisierungsinformation mit der auf dem Aufdruck 114 des Dokuments 100 angegebenen Personalisierungsinformation kann also eine Prüfung der Echtheit des Dokuments erfolgen, da die über das modulierte optische Signal von dem Lesegerät 100 empfangene Information mit der auf dem Aufdruck 114 gezeigten Personalisierungsinformation übereinstimmen muss.

Bei der Information kann es sich auch um ein Wappen, Siegel oder ein anderes Sicherheitsmerkmal handeln. Die ein solches Sicherheitsmerkmal repräsentierende Information wird durch das modulierte optische Signal von dem Sensor 110 des Lesegeräts 108 erfasst. Nach Demodulation des optischen Signals wird die empfangene Information mit einer in der elektronischen Schaltung 112 gespeicherten Referenzinformation verglichen. Wenn die optisch empfangene Information mit der Referenzinformation hinreichend übereinstimmt, wird über die Nutzerschnittstelle 116 ein akustisches oder optisches Signal ausgegeben, welches anzeigt, ob das Dokument 100 die Echtheitsprüfung bestanden hat oder nicht.

Bei der Information, die von der elektronischen Schaltung 104 über die Anzeige 102 durch die Modulation ausgegeben wird, kann es sich auch um einen Fahrzeugparameter und/oder einen Gebührenstatus handeln. Bei dieser Ausführungsform ist das Dokument 100 als elektronisches Kraftfahrzeug-Kennzeichen ausgebildet, welches an einem Kraftfahrzeug angebracht ist oder welches einen integralen Bestandteil des Kraftfahrzeugs bildet.

Beispielsweise kann die elektronische Schaltung 104 eine Schnittstelle zu einem Kraftfahrzeug-Elektronikgerät aufweisen, welches die auszugebende Information an die Schnittstelle der elektronischen Schaltung. 104 in regelmäßigen oder unregelmäßigen Zeitabständen sendet. Bei dem Kraftfahrzeug-Elektronikgerät kann es sich beispielsweise um eine sogenannte Electronic Control Unit (ECU) handeln. Das Kraftfahrzeug-Elektronikgerät kann über ein Kraftfahrzeug-Bussystem mit der elektronischen Schaltung 104 vernetzt sein, um über das Kraftfahrzeug-Bussystem die auszugebende Information zu übertragen.

Beispielsweise kann das Kraftfahrzeug-Elektronikgerät zur Erfassung eines Fahrzeug-Parameters dienen, und zwar auf der Basis von Sensorsignalen. Beispielsweise dient ein Sensor zur Erfassung eines aktuellen Abgaswerts des Kraftfahrzeugs. Dieser aktuelle Abgaswert wird in Form einer Information von dem Kraftfahrzeug-Elektronikgerät an die elektronische Schaltung 104 übertragen, sodass der Abgaswert über die Anzeige 102 ausgegeben wird. Entsprechend kann für weitere Fahrzeugparameter, wie zum Beispiel die Geschwindigkeit, den aktuell von dem Kraftfahrzeug erzeugten Lärmpegel oder andere Umwelt- und/oder sicherheitsrelevante Fahrzeugparameter verfahren werden.

Alternativ oder zusätzlich ist das Kraftfahrzeug-Elektronikgerät zur Bestimmung eines Gebührenstatus ausgebildet. Beispielsweise wird durch das Kraftfahrzeug-Elektronikgerät festgestellt, ob eine erforderliche Gebühr, wie zum Beispiel eine Mautgebühr, eine Steuer oder eine Abgasgebühr, für das Kraftfahrzeug entrichtet worden ist oder zu entrichten ist. Eine entsprechende Information, die den Gebührenstatus angibt, wird von dem Kraftfahrzeug-Elektronikgerät an die elektronische Schaltung 104 ausgegeben, sodass diese Information über die Anzeige 102 ausgegeben wird.

Dementsprechend kann das Lesegerät 108 zur Erfassung der Information, die über die Anzeige 102 ausgegeben wird, von dem stehenden und/oder von dem fahrenden Kraftfahrzeug ausgebildet sein. Das Lesegerät 108 kann über ein Netzwerk mit einem zentralen Servercomputer verbunden sein, in dem die von der Anzeige 102 erfasste Information ausgewertet wird.

Bei den Daten 107 kann es sich hier um das amtliche Kraftfahrzeug-Kennzeichen handeln. Auf der Anzeige 102 wird also visuell sichtbar das amtliche KraftfahrzeugKennzeichen ausgegeben sowie zusätzlich eine oder mehrere weitere Informationen, d.h. die Daten 107, die visuell ohne ein Lesegerät nicht wahrnehmbar sind. Bei dieser Ausführungsform kann eine Aktualisierung des amtlichen Kennzeichens dadurch erfolgen, dass eine Aktualisierung der Daten 106 vorgenommen wird, beispielsweise indem Daten, die das aktualisierte amtliche Kennzeichen beinhalten, von dem Kraftfahrzeug-Elektronikgerät über das Kraftfahrzeug-Bussystem an die elektronische Schaltung 104 gesendet werden, welches die Daten 106 dann mit den empfangenen Daten überschreibt.

Die Figur 2 zeigt eine weitere Ausführungsform eines erfindungsgemäßen Dokuments 100. Bei der Ausführungsform der Figur 2 hat die Anzeige 102 des Dokuments 100 eine Hintergrundbeleuchtung 117. Bei dieser Ausführungsform erfolgt die Generierung des optischen Signals zur Übertragung der in den Daten 107 beinhalteten Information durch eine Modulation der Hintergrundbeleuchtung 117.

Hierzu greift die elektronische Schaltung 104 auf die Daten 107 zu und steuert die Hintergrundbeleuchtung 117 der Anzeige 102 an, um die Hintergrundbeleuchtung 117 entsprechend der zu übertragenden Information zu modulieren. Unabhängig davon greift die elektronische Schaltung 104 auch auf die Daten 106 zu, um diese auf der Anzeige 102 wiederzugeben. Dies kann beispielsweise in Form eines Standbildes erfolgen. Alternativ können die Daten 106 auch eine Bildsequenz beinhalten, wobei die Bilder der Bildsequenz in einer zeitlichen Reihenfolge nacheinander auf der Anzeige 102 wiedergegeben werden.

Die Ansteuerung der Hintergrundbeleuchtung 117 durch die elektronische Schaltung 104 zur Erzeugung des modulierten optischen Signals kann asynchron zu der Wiedergabe der Daten 106 auf der Anzeige 102 erfolgen. Beispielsweise ist die elektronische Schaltung 104 also so ausgebildet, dass sie gleichzeitig die Anzeige 102 zur Wiedergabe der Bilddaten 106 ansteuert und die Hintergrundbeleuchtung 117 zur Aufmodulation des optischen Signals ansteuert, um die in den Daten 107 beinhaltete Information optisch zu senden.

Die Modulation der Hintergrundbeleuchtung 117 kann beispielsweise in Form einer PWM erfolgen. Die PWM-Periode ist dabei so kurz gewählt, dass sie mit dem bloßen Auge nicht visuell wahrnehmbar ist. Mit bloßem Auge nimmt ein Benutzer unabhängig von der PWM die Hintergrundbeleuchtung 117 so wahr, als ob sie permanent mit konstanter Intensität leuchten würde.

Nach einer Ausführungsform der Erfindung wird also nicht das PWM-Verhältnis moduliert, sondern die Länge und/oder zeitliche Reihenfolge der Teilintervalle innerhalb einer PWM-Periode, innerhalb derer die Hintergrundbeleuchtung 117 eingeschaltet bzw. ausgeschaltet ist. Alternativ kann auch das PWM-Verhältnis und/oder die PWM-Periode für eine Modulation verwendet werden.

Besonders bevorzugt bei einer Modulation der Hintergrundbeleuchtung ist die AM. Hierzu wird die Hintergrundbeleuchtung zum Beispiel permanent bei 90% angesteuert. Während der Übertragung mittels Signalmodulation kann die Hintergrundbeleuchtung zum Beispiel zwischen 80 und 100 % moduliert werden, sodass die mittlere Signalstärke 90 % beträgt und so nicht wahrgenommen wird.

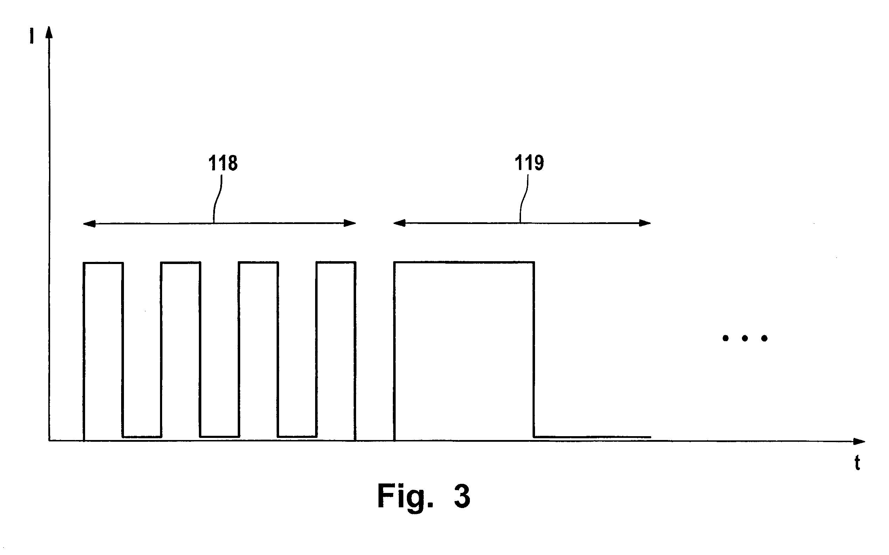

Die Figur 3 zeigt hierzu ein schematisches Beispiel. Die Figur 3 zeigt exemplarisch zwei auf der Zeitachse t aufeinander folgende PWM-Perioden 118 und 119. Beide PWM-Perioden 118 und 119 haben ein PWM-Verhältnis von ca. 0,5, das heißt während ca. der Hälfte eine PWM-Periode wird die Hintergrundbeleuchtung 117 von der elektronischen Schaltung 104 eingeschaltet. Der entsprechende Intensitätsverlauf I der von der Hintergrundbeleuchtung 117 abgestrahlten Strahlung ist in der Figur 3 gezeigt. Die Länge der PWM-Perioden 118, 119, ... ist so kurz gewählt, dass die PWM visuell ohne Hilfsmittel nicht wahrnehmbar ist. Beispielsweise beträgt die Länge einer PWM-Periode höchstens 0,04 s.

In der PWM-Periode 118 wird die Hintergrundbeleuchtung 117 in den Teilintervallen 118.1, 118.2, 118.3 und 118.4 vier Mal hintereinander eingeschaltet. Dagegen wird die Hintergrundbeleuchtung 117 in der PWM-Periode 119 nur ein Mal für das Teilintervall 119.1 eingeschaltet, welches in etwa die Hälfte der Länge der PWM-Periode 119 beträgt.

Beispielsweise wird in der PWM-Periode 118 eine logische "Null" gesendet, wohingegen in der PWM-Periode 119 eine logische "Eins" gesendet wird. Der Intensitätsverlauf in der PWM-Periode 118 ist also repräsentativ für eine logische "Null", wohingegen der Intensitätsverlauf des optischen Signals in der PWM-Periode 119 repräsentativ für eine logische "Eins" ist. Auf diese Art und Weise kann also die in den Daten 107 (vgl. Figur 1 und 2) beinhaltete Information seriell durch Modulation der Hintergrundbeleuchtung 117 von der Anzeige 102 gesendet werden, indem die Hintergrundbeleuchtung 117 durch die elektronische Schaltung 104 entsprechend moduliert wird.

Alternativ können zur Modulation der Hintergrundbeleuchtung 117 auch andere an sich bekannte Modulationsverfahren zur Anwendung kommen, wie zum Beispiel eine Amplituden-Modulation, Frequenz-Modulation, Phasenmodulation oder dergleichen der Hintergrundbeleuchtung 117. Die von der Hintergrundbeleuchtung 117 abgesendete Strahlung wird also als Träger für die Übertragung der Information verwendet, wobei diesem Träger die Information aufmoduliert ist.

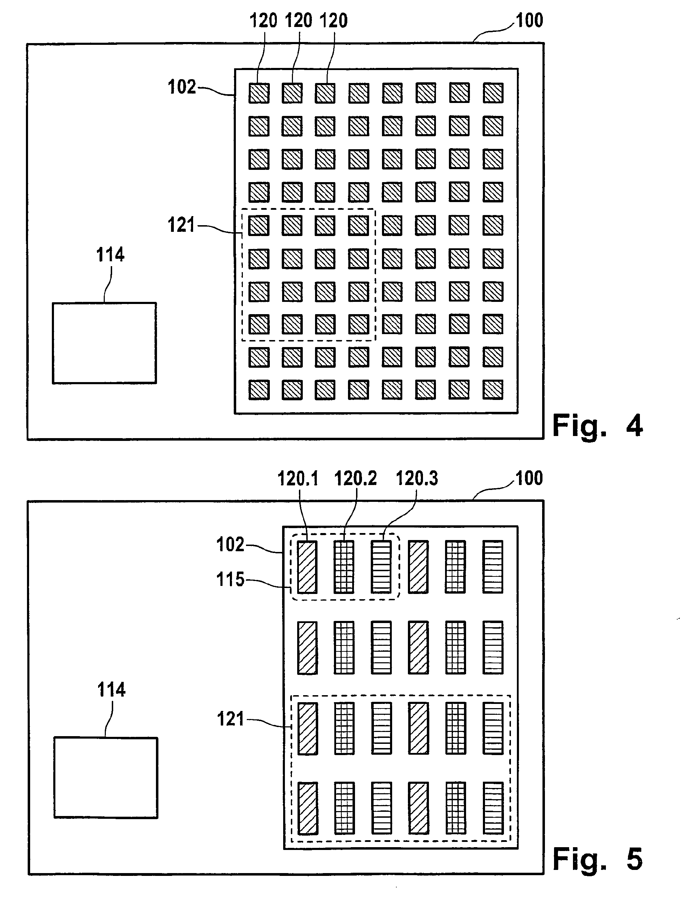

Die Figur 4 zeigt eine schematische Draufsicht auf eine Ausführungsform des Dokuments 100. Die Anzeige 102 ist hier als Schwarz-/Weiß-Anzeige ausgebildet. Die Anzeige 102 beinhaltet mehrere Anzeigeelemente 120, die matrixförmig angeordnet sind. Die Anzeigeelemente 120 werden von der elektronischen Schaltung 104 (vgl. Figuren 1 und 2) zur Wiedergabe der Daten 106 angesteuert, so dass die Wiedergabe visuell durch einen Benutzer wahrnehmbar ist.

Dieser Wiedergabe wird die in den Daten 107 beinhaltete Information aufmoduliert. Dies kann so erfolgen, dass die Intensität der von den Anzeigeelementen 120 zur Wiedergabe der Daten 106 abgegebenen Strahlung für alle Anzeigeelemente 120 global variiert wird, um die Information aufzumodulieren.

Diese Variation kann auch nur für eine Teilmenge der Anzeigeelemente 120 erfolgen, beispielsweise für die Teilmenge der Anzeigeelemente 120, die in einem zusammenhängenden Bereich 121 der Anzeige 102 angeordnet sind. Hierdurch wird ein Nachstellen der Anzeige 102 weiter erschwert, da ein Fälscher nicht wissen kann, dass ein solcher Bereich 121 der Anzeige 102 existiert, und auch nicht, wo sich dieser Bereich 121 auf der Anzeige 102 befindet.

Die Anzeigevorrichtung 102 kann so ausgebildet sein, dass die Wiedergabe der Daten 106 mit einer vorgegebenen Bild-Wiederholfrequenz von zum Beispiel 25 Hz oder 50 Hz erfolgt. Die Modulation kann dann so erfolgen, dass die Anzeigeelemente 120 nur für ein Teilintervall einer jeden Bild-Wiederholperiode für die Wiedergabe angesteuert werden, so dass die Anzeigeelemente nur während dieses Teilintervalls leuchten. Die Lage und/oder die Länge dieses Teilintervalls innerhalb einer Bild-Wiederholperiode wird variiert, um die Information aufzumodulieren. Dies kann wiederum nur für die Anzeigeelemente 120 erfolgen, die sich in dem Bereich 121 befinden.

Beispielsweise sind die Anzeigeelemente 120 bei dieser Ausführungsform als OLED-Anzeigeelemente ausgebildet. Diese werden mit einem erhöhten Intensitätswert angesteuert, dass das Leuchten nur während des Teilintervalls einer Bild-Wiederholperiode durch eine erhöhte Intensität kompensiert wird. An dem visuellen Eindruck der Wiedergabe der Daten 106 ändert sich also für den Benutzer durch die Modulation nichts.

Die Figur 5 zeigt eine weitere Ausführungsform des Dokuments 100, wobei die Anzeige 102 für eine farbige Wiedergabe der Daten 106 (vgl. Figuren 1 und 2) ausgebildet ist. Hierzu wird jedes farbige Bildelement 115 der Anzeige 102 durch drei verschieden farbige Anzeigenelemente 120.1, 120.2 und 120.3 realisiert. Die Anzeigeelemente 120.1 dienen dabei beispielsweise zur Abstrahlung von roter Strahlung, die Anzeigeelemente 120.2 zur Abstrahlung von grüner Strahlung und die Anzeigeelemente 120.3 zur Abstrahlung von blauer Strahlung.

Bei dieser Ausführungsform kann die Modulation der Wiedergabe der Daten 106 auf der Anzeige 102 so erfolgen, dass die zu übertragende Information nur durch Anzeigeelemente derselben Farbe aufmoduliert wird. Beispielsweise erfolgt die Modulation also nur durch entsprechende Ansteuerung beispielsweise der roten Anzeigeelemente 120.1. Diese dienen neben der Wiedergabe der Daten 106 also auch zum Versenden des optischen Signals, dem die Information aufmoduliert ist. Die Verwendung nur eines der drei Spektralbereiche, die von den Anzeigeelementen 120.1, 120.2 und120.3 zur Verfügung gestellt werden, hat den Vorteil, dass der Empfang dieses optischen Signals durch das Lesegerät (vgl. Lesegerät 108 der Figuren 1 und 2) vereinfacht wird.

Wie bei der Ausführungsform der Figur 4 kann auch bei der Ausführungsform der Figur 5 vorgesehen sein, dass nur Anzeigeelemente 120 in einem Bereich 121 für die Modulation verwendet werden.

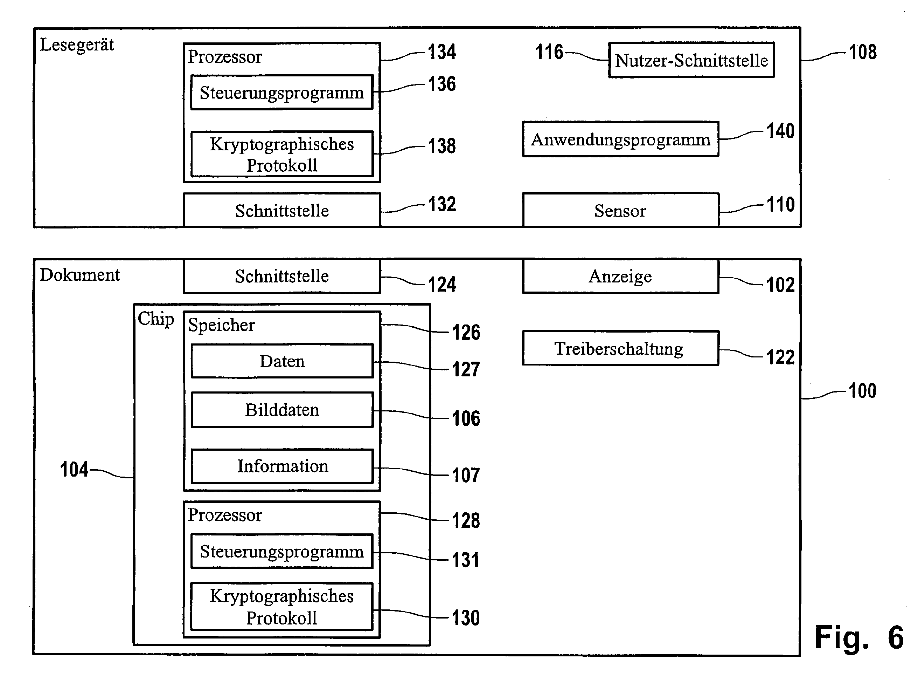

Die Figur 6 zeigt eine weitere Ausführungsform des Dokuments 100 und des Lesegeräts 108.

Das Dokument 100 hat eine Treiberschaltung 122 zur Ansteuerung der Anzeige 102. Die elektronische Schaltung 104 des Dokuments 100 ist hier als Chip, insbesondere als RFID-Chip, ausgebildet. Die elektronische Schaltung 104 ist mit einer Schnittstelle 124 des Dokuments 100 zur Kommunikation mit dem Lesegerät 108 verbunden. Die Schnittstelle 124 kann beispielsweise ein oder mehrere Antennenwindungen, die z.B. in einem Randbereich des Dokuments 100 verlaufen, aufweisen.

Die Schaltung 104 hat einen elektronischen Speicher 126 zur Speicherung von schutzbedürftigen Daten 127. Bei den schutzbedürftigen Daten 127 kann es sich beispielsweise um biometrische Daten des Trägers des Dokuments 100, wie zum Beispiel Fingerabdruckdaten, Iris-Scandaten oder dergleichen handeln. Die schutzbedürftigen Daten 127 sind in einem besonders geschützten Speicherbereich des Speichers 126 gespeichert.

Ferner sind in demselben Speicher 126 oder einem anderen elektronischen Speicher des Dokuments 100 die Daten 106 und 107 gespeichert. Die Schaltung 104 hat ferner einen Prozessor 128 zur Ausführung von Programminstruktionen 130, durch welche die das Dokument 100 betreffenden Schritte eines kryptographischen Protokolls implementiert werden. Der Prozessor 128 dient ferner zur Ausführung von Programminstruktionen 131, die ein Steuerungsprogramm implementieren. Das Lesegerät 108 hat einen optischen Sensor 110 zur Erfassung der Bildwiedergabe der Anzeige 102 und zum Empfang des von der Anzeige 102 abgesendenten modulierten optischen Signals. Bei dem optischen Sensor 110 kann es sich um einen CCD-Sensor oder einen Scanner handeln.

Das Lesegerät 108 hat ferner eine Schnittstelle 132, die der Schnittstelle 124 des Dokuments 100 entspricht. Beispielsweise ist also die Schnittstelle 132 für eine RFID-Kommunikation mit dem Dokument 100 bzw. dessen Schaltung 104 ausgebildet.

Das Dokument 108 hat zumindest einen Prozessor 134 zur Ausführung eines Steuerungsprogramms 136 sowie von Programminstruktionen 138, durch welche die das Lesegerät 108 betreffenden Schritte des kryptographischen Protokolls implementiert werden. Das Lesegerät 108 kann ferner zur Ausführung eines Anwendungsprogramms 140 dienen. Das Anwendungsprogramm 140 kann auch von einem anderen Computersystem ausgeführt werden, welches mit dem Lesegerät 108 verbunden ist.

Das durch die Programminstruktionen 131 implementierte Steuerungsprogramm des Dokuments 100 ist so ausgebildet, dass es die Treiberschaltung 122 zur Wiedergabe der Daten 106 und zur Sendung des optischen Signals ansteuert, um die in den Daten 107 beinhaltete Information zu dem Lesegerät 108 zu senden.

Zum Zugriff auf die Daten 127 des Speichers 126 erfasst das Lesegerät 108 zunächst mittels seines optischen Sensors 110 die Anzeige 102. Hierzu wird der Sensor 110 entsprechend von dem Steuerungsprogramm 136 angesteuert. Das Steuerungsprogramm 136 demoduliert das von dem Sensor 110 empfangene optische Signal, um so die Information zu empfangen. Auf diese Art und Weise erhält das Steuerungsprogramm 136 Kenntnis des kryptographischen Schlüssels.

Nach der Erfassung des kryptographischen Schlüssels aus der Wiedergabe der Daten 107 startet das Steuerungsprogramm 136 die Ausführung der Programminstruktionen 138, so dass das kryptographische Protokoll zwischen dem Lesegerät 108 und dem Dokument 100 mit Hilfe des kryptographischen Schlüssels durchgeführt wird. Beispielsweise handelt es sich bei dem kryptographischen Protokoll um ein Challenge-Response-Verfahren.

Das Challenge-Response-Verfahren kann beispielsweise so ablaufen, dass das Lesegerät 108 zunächst eine Anforderung der Daten an die Schnittstelle 124 des Dokuments 100 sendet. Daraufhin wird die Ausführung der Programminstruktionen 130 gestartet. Hierdurch wird seitens des Dokuments 100 z. B. eine Zufallszahl generiert, die mit einem Referenzwert des kryptographischen Schlüssels symmetrisch verschlüsselt wird, so dass ein Chiffrat resultiert. Die verschlüsselte Zufallszahl, d.h. das Chiffrat, wird von der Schnittstelle 124 des Dokuments 100 an die Schnittstelle 132 des Lesegeräts 108 gesendet.

Durch Ausführung der Programminstruktionen 138 wird seitens des Lesegeräts 108 das von dem Dokument 100 empfangene Chiffrat mit Hilfe des zuvor empfangenen kryptographischen Schlüssels entschlüsselt. Das Resultat der Entschlüsselung wird von der Schnittstelle 132 an die Schnittstelle 124 des Dokuments 100 gesendet.

Mit Hilfe der Programminstruktionen 130 wird dann seitens des Dokuments 100 geprüft, ob das Ergebnis der Entschlüsselung des Chiffrats, welche das Dokument von dem Lesegerät 108 empfangen hat, identisch ist mit der initial durch das Dokument 100 erzeugten Zufallszahl. Wenn dies der Fall ist, stimmt der Referenzwert des kryptographischen Schlüssels, der in den Programminstruktionen 130 beinhaltet ist, oder auf den diese zugreifen können, mit dem aus der Bildwiedergabe der Anzeige 102 durch das Lesegerät 108 erfassten kryptographischen Schlüssel überein, wodurch die Authentizität des Dokuments 100 und die Zugriffsberechtigung des Lesegeräts 108 gegeben ist.

Das Dokument 100 überträgt daraufhin die von dem Lesegerät 108 angeforderten Daten 127 des Speichers 126 von der Schnittstelle 124 zu der Schnittstelle 132. Diese Daten können von dem Steuerungsprogramm 136 an das Anwendungsprogramm 140 für eine Weiterverarbeitung übertragen werden. Beispielsweise werden die Daten auf einer Bildschirmmaske ausgegeben.

Bevor die Daten aus dem Speicher 126 an das Lesegerät 108 übertragen werden, können weitere Überprüfungen erforderlich sein, wie z.B. nach einem EAC Verfahren. Alternativ oder zusätzlich kann auch ein kryptographisches Protokoll basierend auf einem asymmetrischen Schlüssel zum Einsatz kommen.

### Bezugszeichenliste

- 100: Dokument
- 102: Anzeige
- 104: Schaltung
- 106: Daten
- 107: Daten
- 108: Lesegerät
- 110: Sensor
- 112: Schaltung
- 114: Aufdruck
- 115: Bildelement
- 116: Nutzerschnittstelle
- 117: Hintergrundbeleuchtung
- 118: PWM-Periode
- 118.1: Teilintervall
- 118.2: Teilintervall
- 118.3: Teilintervall
- 118.4: Teilintervall
- 119: PWM-Periode
- 119.1: Teilintervall
- 120: Anzeigeelement
- 120.1: Anzeigeelement
- 120.2: Anzeigeelement
- 120.3: Anzeigeelement
- 121: Bereich
- 122: Treiberschaltung
- 124: Schnittstelle
- 126: Speicher
- 127: Daten
- 128: Prozess
- 130: Programminstruktionen
- 131: Programminstruktionen
- 132: Manipulandum
- 134: Prozessor
- 136: Steuerungsprogramm
- 138: Programminstruktionen
- 140: Anwendungsprogramm

## Patentansprüche

1. Dokument mit einer integrierten Anzeigevorrichtung (102), einem elektronischen Speicher (126) zur Speicherung erster (106) und zweiter (107) Daten, und mit Steuerungsmitteln (122, 128, 131) zur Ansteuerung der Anzeigevorrichtung für eine Wiedergabe der ersten Daten, **dadurch gekennzeichnet, dass** die Steuerungsmittel zur Ansteuerung der Anzeigevorrichtung für eine Modulation zum Senden der zweiten Daten ausgebildet sind, wobei die Steuerungsmittel zur Ansteuerung der Anzeigevorrichtung für eine Modulation der Wiedergabe der ersten Daten ausgebildet sind.

2. Dokument nach Anspruch 1, wobei die Anzeigevorrichtung mehrere Anzeigeelemente (120) aufweist, und wobei die Modulation durch Ansteuerung einer Teilmenge der Anzeigeelemente erfolgt.

3. Dokument nach Anspruch 2, wobei die Teilmenge der Anzeigeelemente einen Bereich (121) der Anzeigevorrichtung bildet.

4. Dokument nach Anspruch 2, wobei die Anzeigevorrichtung mehrere Bildelemente (115) für eine farbige Wiedergabe der ersten Daten aufweist, wobei jedes der Bildelemente durch zumindest drei verschieden farbige Anzeigeelemente konstituiert ist, und wobei die Teilmenge nur Anzeigeelemente derselben Farbe beinhaltet.

5. Dokument nach einem der vorhergehenden Ansprüche, wobei die Wiedergabe der ersten Daten mit einer vorgegebenen Bild-Wiederholperiode erfolgt, wobei zumindest eine Teilmenge der Anzeigeelemente nur während eines Teils der Bild-Wiederholperiode für die Wiedergabe der ersten Daten angesteuert wird, wobei die Ansteuerung so erfolgt, dass die Ansteuerung der Anzeigeelemente während nur des Teils der Bild-Wiederholperiode durch eine erhöhte Intensität der Ansteuerung kompensiert wird.

6. Dokument nach einem der vorhergehenden Ansprüche, wobei die Anzeigevorrichtung eine Hintergrundbeleuchtung aufweist, und wobei die Steuerungsmittel zu einer Modulation der Hintergrundbeleuchtung zum Senden der zweiten Daten ausgebildet sind.

7. Dokument nach einem der vorhergehenden Ansprüche, wobei die Modulation mit Hilfe eines Pulsweiten-Modulationsverfahrens, Pulskodemodulationsverfahrens, eines Amplituden-Modulationsverfahrens, eines Frequenz-Modulationsverfahrens und/oder eines Phasen-Modulationsverfahrens erfolgt.

8. Dokument nach einem der vorhergehenden Ansprüche, wobei die zweiten Daten zumindest eine Information beinhalten, die durch die Modulation optisch gesendet wird.

9. Dokument nach Anspruch 8, wobei es sich bei der Information um eine Personalisierungsinformation, ein Sicherheitsmerkmal und/oder einen kryptographischen Schlüssel handelt.

10. Dokument nach einem der vorhergehenden Ansprüche, mit einem geschützten Speicherbereich zur Speicherung dritter Daten (127), und mit Mitteln (130) zur Ausführung eines kryptographischen Protokolls und mit einer Schnittstelle (124) zu einem Lesegerät (108), wobei ein Zugriff des Lesegeräts auf die dritten Daten über die Schnittstelle die Ausführung des kryptographischen Protokolls mit Hilfe eines in den zweiten Daten beinhalteten oder aus diesen ableitbaren kryptographischen Schlüssels voraussetzt.

11. Dokument nach einem der vorhergehenden Ansprüche, wobei die Modulation nicht visuell wahrnehmbar ist.

12. Lesegerät für ein Dokument nach einem der vorhergehenden Ansprüche, mit einem optischen Sensor (102) zur Erfassung der Anzeigevorrichtung des Dokuments und mit Mitteln zur Demodulation zum Empfang der in den zweiten Daten beinhalteten Information.

13. Lesegerät nach Anspruch 12, mit Mitteln (136) zur Verifikation des Dokuments mit Hilfe der von der Anzeigevorrichtung erfassten Wiedergabe der zweiten Daten.

14. Lesegerät nach Anspruch 12 oder 13, mit Mitteln (138) zur Ausführung eines kryptographischen Protokolls und einer Schnittstelle (132) zur Kommunikation mit dem Dokument, wobei ein Zugriff auf die dritten Daten (127) des Dokuments voraussetzt, dass das kryptographische Protokoll mit Hilfe einer aus der Wiedergabe der zweiten Daten erfassten Information erfolgreich durchgeführt worden ist.

15. Verfahren zur Verifikation eines Dokuments nach einem der Ansprüche 1 bis 11, mit folgenden Schritten:
- Demodulation eines von der Anzeigevorrichtung abgestrahlten optischen Signals zum Empfang einer Information,
- Vergleich der Information mit einer Referenz-Information.

## Claims

1. Document comprising a built-in display device (102), an electronic memory (126) for storing first data (106) and second data (107), and control means (122, 128, 131) for controlling the display device in order to reproduce the first data, **characterized in that** Lhe control means are designed to control the display device for modulation for the purpose of transmitting the second data, the control means being designed to control the display device in order to modulate the reproduction of the first data.

2. Document according to Claim 1, the display device having a plurality of display elements (120), and the modulation being effected by controlling a subset of the display elements.

3. Document according to Claim 2, the subset of the display elements forming a region (121) of the display device.

4. Document according to Claim 2, the display device having a plurality of pixels (115) for reproducing the first data in colour, each of the pixels being constituted by at least three differently coloured display elements, and the subset comprising only display elements of the same colour.

5. Document according to one of the preceding claims, the first data being reproduced with a predefined refresh period, at least one subset of the display elements being controlled only during part of the refresh period in order to reproduce the first data, control being effected in such a manner that the control of the display elements is compensated for by an increased control intensity only during that part of the refresh period.

6. Document according to one of the preceding claims, the display device having backlighting, and the control means being designed to modulate the backlighting in order to transmit the second data.

7. Document according to one of the preceding claims, the modulation being effected with the aid of a pulse width modulation method, a pulse code modulation method, an amplitude modulation method, a frequency modulation method and/or a phase modulation method.

8. Document according to one of the preceding claims, the second data comprising at least one item of information which is optically transmitted by means of the modulation.

9. Document according to Claim 8, the item of information being an item of personalization information, a security feature and/or a cryptographic key.

10. Document according to one of the preceding claims, having a protected memory area for storing third data (127) and having means (130) for executing a cryptographic protocol and having an interface (124) to a reader (108), access to the third data by the reader via the interface presupposing the execution of the cryptographic protocol with the aid of a cryptographic key which is contained in the second data or can be derived from the latter.

11. Document according to one of the preceding claims, the modulation not being visually perceptible.

12. Reader for a document according to one of the preceding claims, having an optical sensor (110) for detecting the display device of the document and having demodulation means in order to receive the information contained in the second data.

13. Reader according to Claim 12, having means (136) for verifying the document with the aid of the reproduction of the second data which is detected by the display device.

14. Reader according to Claim 12 or 13, having means (138) for executing a cryptographic protocol and an interface (132) for communicating with the document, access to the third data (127) of the document presupposing that the cryptographic protocol has been successfully executed with the aid of an item of information detected from the reproduction of the second data.

15. Method for verifying a document according to one of Claims 1 to 11, having the following steps of:
- demodulating an optical signal emitted by the display device in order to receive an item of information,
- comparing the item of information with an item of reference information.

## Revendications

1. Document comprenant un dispositif d'affichage (102) intégré, une mémoire électronique (126) pour mémoriser des premières (106) et des deuxièmes (107) données, et comprenant des moyens de commande (122, 128, 131) pour commander le dispositif d'affichage en vue d'une reproduction des premières données, **caractérisé en ce que** les moyens de commande sont configurés pour commander le dispositif d'affichage pour une modulation en vue de l'émission des deuxièmes données, les moyens de commande étant configurés pour commander le dispositif d'affichage pour une modulation de la reproduction des premières données.

2. Document selon la revendication 1, dans lequel le dispositif d'affichage présente plusieurs éléments d'affichage (120) et dans lequel la modulation s'effectue en commandant une quantité partielle des éléments d'affichage.

3. Document selon 1 revendication 2, dans lequel la quantité partielle des éléments d'affichage forme une zone (121) du dispositif d'affichage.

4. Document selon la revendication 2, dans lequel le dispositif d'affichage présente plusieurs éléments d'image (115) pour une reproduction en couleur des premières données, dans lequel chacun des éléments d'image est constitué d'au moins trois éléments d'affichage de couleur différente et dans lequel la quantité partielle ne contient que des éléments d'affichage de la même couleur.

5. Document selon l'une des revendications précédentes, dans lequel la reproduction des premières données s'effectue avec une période de répétition d'image prédéfinie, dans lequel au moins une quantité partielle des éléments d'affichage n'est commandée que pendant une partie de la période de répétition d'image pour la reproduction des premières données, dans lequel la commande s'effectue de telle sorte que la commande des éléments d'affichage pendant une partie seulement de la période de répétition d'image soit compensée par une intensité accrue de la commande.

6. Document selon l'une des revendications précédentes, dans lequel le dispositif d'affichage présente un éclairage d'arrière-plan et dans lequel les moyens de commande sont configurés pour une modulation de l'éclairage d' arrière-plan en vue de l' émission des deuxièmes données.

7. Document selon l'une des revendications précédentes, dans lequel la modulation s'effectue à l'aide d'un procédé de modulation de largeur d'impulsion, d'un procédé de modulation par impulsions et codage, d'un procédé de modulation d'amplitude, d'un procédé de modulation de fréquence et/ou d'un procédé de modulation de phase.

8. Document selon l'une des revendications précédentes, dans lequel les deuxièmes données comprennent au moins une information qui est émise de manière optique par la modulation.

9. Document selon la revendication 8, dans lequel l'information est une information de personnalisation, une caractéristique de sécurité et/ou une clé cryptographique.

10. Document selon l'une des revendications précédentes, comprenant une zone de mémoire protégée pour mémoriser des troisièmes données (127) et comprenant des moyens (130) pour exécuter un protocole cryptographique et comprenant une interface (124) vers un lecteur (108), un accès du lecteur aux troisièmes données par le biais de l'interface supposant l'exécution du protocole cryptographique à l'aide d'une clé cryptographique contenue dans les deuxièmes données ou dérivées à partir de celles-ci.

11. Document selon l'une des revendications précédentes, dans lequel la modulation n'est pas perceptible visuellement.

12. Lecteur pour un document selon l'une des revendications précédentes, comprenant un capteur optique (110) pour détecter le dispositif d'affichage du document et comprenant des moyens de démodulation pour la réception des informations contenues dans les deuxièmes données.

13. Lecteur selon la revendication 12, comprenant des moyens (136) de vérification du document à l'aide de la reproduction des deuxièmes données détectées par le dispositif d'affichage.

14. Lecteur selon la revendication 12 ou 13, comprenant des moyens (138) pour exécuter un protocole cryptographique et une interface (132) de communication avec le document, un accès aux troisièmes données (127) du document supposant que l'exécution du protocole cryptographique à l'aide d'une information détectée à partir de la reproduction des deuxièmes données a réussi.

15. Procédé de vérification d'un document selon l'une des revendications 1 à 11, comprenant les étapes suivantes :
- démodulation d'un signal optique rayonné par le dispositif d'affichage pour recevoir une information,
- comparaison de l'information avec une information de référence.
